# EUROPÄISCHE PATENTSCHRIFT

(11) **EP 1 588 448 B1**
(45) Veröffentlichungstag und Bekanntmachung des Hinweises auf die Patenterteilung: **27.09.2006**
(21) Anmeldenummer: 04700010.4
(22) Anmeldetag: 30.12.2003
(51) Int. Cl.: H01M 8/04

(54) **BRENNSTOFFZELLENSYSTEM UND VERFAHREN ZUM BETREIBEN EINES BRENNSTOFFZELLENSYSTEMS**
FUEL CELL SYSTEM AND METHOD FOR OPERATING A FUELL CELL SYSTEM
SYSTEME DE PILE A COMBUSTIBLE ET PROCEDE POUR FAIRE FONCTIONNER UNE SYSTEME DE PILE A COMBUSTIBLE

(30) Priorität: 30.12.2002 DE 10261418
(43) Veröffentlichungstag der Anmeldung: 26.10.2005
(73) Patentinhaber: DaimlerChrysler AG, 70567 Stuttgart (DE)
(72) Erfinder: AUTENRIETH, Rainer, 71723 Grossbottwar (DE)
(86) Internationale Anmeldenummer: PCT/DE2004/000002
(87) Internationale Veröffentlichungsnummer: WO 2004/064185

(56) Entgegenhaltungen:
- EP-A- 0 701 294
- WO-A-99/46140
- DE-A- 4 329 323
- DE-A- 10 109 872
- DE-A- 19 731 250
- US-A- 4 962 462

## Beschreibung

Die Erfindung betrifft ein Verfahren zum Betreiben eines Brennstoffzellensystems nach der im Oberbegriff von Anspruch 1 näher definierten Art, sowie ein Brennstoffzellensystem nach der im Oberbegriff von Anspruch 9 näher definierten Art.

Entsprechende Brennstoffzellensysteme sind aus des EP 0 782 209 A1 und der US 4 962 462 A bekannt. Diese Brennstoffzellensysteme weisen eine Batterie auf, um die systembedingt vergleichsweise träge Brennstoffzelle in Systemen einsetzen zu können, welche sehr hohe dynamische Anforderungen an die Leistungsbereitstellung aufweisen.

Grundlegend stellt sich bei der Kopplung von Brennstoffzellen und Batterie aufgrund der vorliegenden Kennlinien der Brennstoffzelle und der dagegen vergleichsweise steifen Kennlinie der Batterie ein dem Schnittpunkt dieser Kennlinien entsprechender Betriebspunkt ein. Dieser Betriebspunkt ist jedoch häufig nicht gewünscht, da er mit entsprechend hohen Ströme zum Laden der Batterie einhergeht oder da die Brennstoffzelle nicht unter optimalen Betriebsbedingungen eingesetzt wird. Dadurch wird der Wirkungsgrad des Systems aufgrund des vergleichsweise hohen inneren Widerstands der Batterie und der ungünstigen Betriebsbedingungen der Brennstoffzelle verschlechtert.

In der oben genannten EP 0 782 209 A1 ist nun ein System aus Schwingkreis, Trafo und Gleichrichter zwischen der Batterie und der Brennstoffzelle eingesetzt, welches grundlegend in der Art eines DC/DC-Wandlers aufgebaut ist. Über diesen DC/DC-Wandler lassen sich die Kennlinien der Brennstoffzelle und der Batterie vollständig voneinander entkoppeln und es lassen sich für die Batterie und die Brennstoffzelle die jeweils günstigsten Betriebsbedingungen einstellen, ohne dass sich die Elemente gegenseitig zu ihrem Nachteil beeinflussen.

Der Aufbau mit dem DC/DC-Wandler stellt jedoch bei der Serienfertigung von derartigen Systemen, beispielsweise zum Einsatz in Kraftfahrzeugen, einen gravierenden Nachteil dar. DC/DC-Wandler sind vergleichsweise anfällig, brauchen einen relativ großen Bauraum und sind sehr teuer, so dass sich die Anlage insgesamt massiv verteuert, was beispielsweise für den oben genannten Einsatzfall von Brennstoffzellensystemen in einem Kraftfahrzeug aufgrund der vergleichsweise hohen zu erwartenden Stückzahlen gravierende Auswirkungen auf die Wirtschaftlichkeit von derartigen Systemen hat.

Aus der WO 01/91214 A1 sowie, unter Erzielung eines letztendlich für den Verbraucher ähnlichen Effekts, auch aus der WO 00/79623 A1 sind Brennstoffzellensysteme bekannt, welche durch gepulsten Betrieb der Brennstoffzelle, dieser eine hohe Leistung entnehmen können. Dabei wird letztendlich eine gewisse inhärente kapazitive Eigenschaft der Brennstoffzelle genutzt, um die Leistungscharakteristik durch gepulsten Betrieb zu erhöhen. Im Gegensatz zu dem oben beschriebenen Betrieb mit einem DC/DC-Wandler erlauben diese reinen Pulsbetreibe jedoch keine Flexibilität hinsichtlich der der Brennstoffzelle zu entnehmenden Leistung. Auch scheint es im Falle der Kombination mit einer Batterie nachteilig, dass diese aufgrund der hohen Ströme beim Laden sehr intensiv belastet wird und damit entsprechende Verluste unvermeidlich sind.

Zum weiteren Stand er Technik soll außerdem auf die DE 100 56 429 A1 hingewiesen werden. Bei diesen Brennstoffzellensystemen erfolgt die Entnahme von elektrischer Leistung aus der Brennstoffzelle jeweils getaktet über eine Schalteinrichtung bzw. einen Schalter zwischen dem System und einem Verbraucher, wobei durch die Taktung auf das Vorhandensein bzw. Fehlen von Brennstoff in der Brennstoffzelle, insbesondere in deren Anodenbereich, im Bezug auf die jeweils von der Brennstoffzelle geforderte Leitung reagiert wird. Als Kenngröße für das Angebot an Brennstoff in der Brennstoffzelle kann beispielsweise der Druck im Bereich der Brennstoffzelle bzw. im Anodenbereich der Brennstoffzelle genutzt werden.

Zum weiteren allgemeinen Stand der Technik beschreibt die DE 101 25 106 A1 ein Brennstoffzellensystem mit einer Brennstoffzelle und einer Energiespeichereinrichtung. Die Energiespeichereinrichtung besteht dabei aus wenigsten einer Batterie und einem Ladungszwischenspeicher mit einem geringeren Innenwiderstand als die Batterie.

Es ist die Aufgabe der Erfindung, ein Brennstoffzellensystem sowie ein Verfahren zum Betrieb dieses Brennstoffzellensystems zu schaffen, welches die oben genannten Nachteile des Standes der Technik vermeidet und ein kostengünstiges, robustes, zuverlässig arbeitendes und eine hohe Performance ermöglichendes Brennstoffzellensystem darstellt.

Erfindungsgemäß wird diese Aufgabe durch das mit den Merkmalen im kennzeichnenden Teil des Anspruchs 1 beschriebene Verfahren gelöst. Ein entsprechendes Brennstoffzellensystem zur Lösung der oben angeführten Aufgabe ist durch die Merkmale im kennzeichnenden Teil des Anspruchs 9 angegeben.

Sowohl das Brennstoffzellensystem als auch das Verfahren zu seinem Betrieb, erlauben es mit minimalen Mitteln, nämlich zwei Schaltern, z.B. elektronischen Schaltern wie MOSFET's oder dergleichen, das Brennstoffzellensystem hochflexibel zu gestalten und zu betreiben. Zwar könnte mit Hilfe eines DC/DC-Wandlers eine ähnliche Flexibilität erzielt werden, dies wäre jedoch immer mit den Eingangs bereits geschilderten Nachteilen verbunden.

Das erfindungsgemäße, einfache und außerordentlich robuste Brennstoffzellensystem erlaubt es durch eine gezielte Betätigung der wenigstens zwei Schalter, z.B. ausgehende von messbaren Ereignissen, in periodischer Wiederholung die inhärenten Eigenschaften der einzelnen Komponenten in ihren einzelnen Betriebespunkten ideal aufeinander abzustimmen. Die in dem Brennstoffzellensystem auftretenden elektrischen Leistungsverluste lassen sich so, bei bestmöglicher Performance, minimieren. Damit läst sich letztendlich über eine derartiges Verfahren der Systemwirkungsgrad steigern.

Des weiteren muss bei dem erfindungsgemäßen Brennstoffzellensystem keine Leistungsanpassung der einzelnen Komponenten bei der Auslegung des Systems erfolgen, da die Verteilung der benötigten bzw. erzeugten Leistung, z.B. durch die Pulsweiten der Öffnung der einzelnen Schalter, bei dessen Betrieb durch entsprechende Schalterstellungen realisiert werden kann. Damit wird auch eine Anpassung des Systems an verschiedene Zustände, z.B. sich dynamisch ändernde Lastzustände während des Betriebs, sehr einfach möglich. Auch dadurch kann letztendlich zu der gesteigerten Performance des Brennstoffzellensystems beigetragen werden.

Grundsätzlich ist das erfindungsgemäße Verfahren und/oder das erfindungsgemäße Brennstoffzellensystem in jeder Verwendungsform desselben sinnvoll einsetzbar. Es spielt dabei keine Rolle, ob das Brennstoffzellensystem als stationäres oder mobiles Brennstoffzellensystem betrieben wird, und ob dieses unmittelbar mit Wasserstoff oder mit einem in einer Gaserzeugungseinrichtung aus dem Brennstoff erzeugten wasserstoffhaltigen Gas betrieben wird. Es ist jedoch besonders vorteilhaft, ein derartiges System in einem mobilen Brennstoffzellensystem, insbesondere in einem Kraftfahrzeug, zu verwenden.

Derartige Systeme, welche in Kraftfahrzeugen oder andersartigen Fahrzeugen zu Wasser, zu Lande oder in der Luft eingesetzt werden, können der Bordstromversorgung eines solchen Fahrzeugs dienen. Sie werden dann im allgemeinen als Hilfsenergieerzeuger oder APU (Auxiliary Power Unit) bezeichnet. In diesen Systemen, jedoch auch in Brennstoffzellensystemen, welche für den Antrieb des mobilen Systems ausgelegt sind, kann das erfindungsgemäße Verfahren besonders günstig verwendet werden, da hier sehr häufig wechselnde und hochdynamische Anforderungen an die von der Brennstoffzelle bereitzustellende Leistung geknüpft sind. Durch die Erfindung lässt sich dies bei bestmöglichem Wirkungsgrad und hoher Flexibilität zu niedrigen Entstehungskosten der Elektronik realisieren.

Weitere besonders günstige Ausgestaltungsvarianten der Erfindung ergeben sich aus den Unteransprüchen und werden anhand des Ausführungsbeispiels, welches nachfolgend unter Bezugnahme auf die Figuren eingehend erläutert wird, deutlich.

Dabei zeigen:
- Fig. 1: eine schematische Darstellung eines möglichen Aufbaus des erfindungsgemäßen Brennstoffzellensystems;
- Fig. 2: ein Strom-Spannungs-Diagram mit den Kennlinien der Komponenten des erfindungsgemäßen Brennstoffzellensystems;
- Fig. 3: einen beispielhaften zeitlichen Verlauf der für das erfindungsgemäße Verfahren relevanten Größen;und
- Fig. 4: eine schematische Darstellung eines alternativen möglichen Aufbaus des erfindungsgemäßen Brennstoffzellensystems.

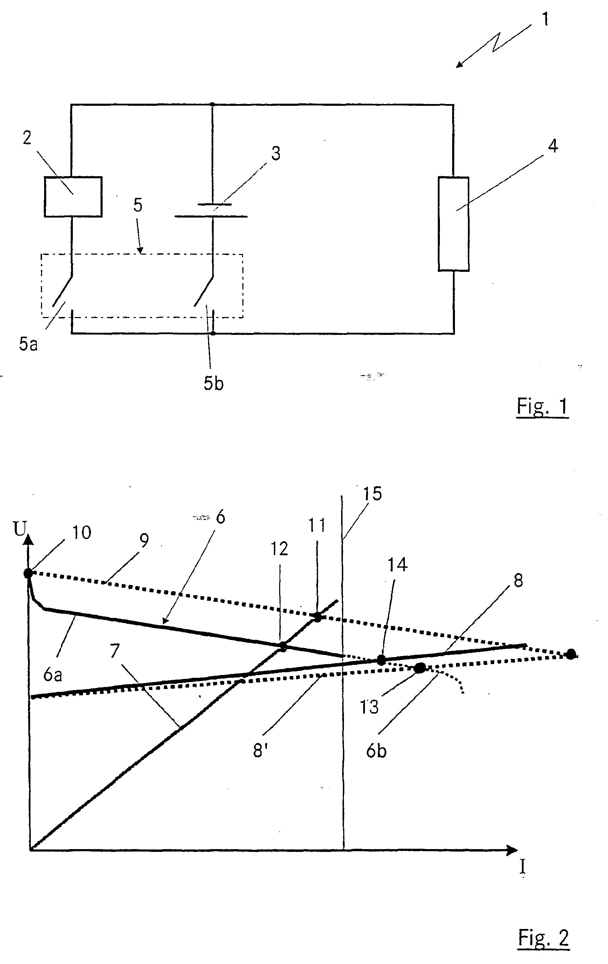

In Fig. 1 ist ein Brennstoffzellensystem 1 prinzipmäßig dargestellt, welches neben einer Brennstoffzelle 2 eine Energiespeichereinrichtung 3 und wenigstens einen elektrischen Verbraucher 4 umfasst.

Unter der Brennstoffzelle 2 kann sowohl eine einzelne Brennstoffzelle, als auch ein aus einer Vielzahl von Brennstoffzellen zusammengesetzter Brennstoffzellenstack verstanden werden. Bevorzugt, jedoch nicht darauf eingeschränkt, soll im Rahmen der Erfindung, darunter eine Brennstoffzelle oder eine Brennstoffzellenstack in einer Ausgestaltung mit protonenleitenden Membranen (PEM) verstanden werden. Vergleichbares gilt analog auch für die Energiespeichereinrichtung 3, welche z.B. als Batterie ausgebildet sein soll. Das diese Batterie sich dann in der üblichen Art und Weise aus einer Vielzahl von einzelnen Batteriezellen zusammensetzt wird als selbstverständlich vorausgesetzt. Andersartige Ausgestaltungen der Energiespeichereinrichtung 3, z.B. als Dünnschichtspeicherkondensator (DSK) bzw. Supercap, einzeln oder aus einer Vielzahl von Einzelkomponenten zusammengesetzt, sind jedoch auch möglich. Unter dem Verbraucher 4 kann sowohl ein einzelner elektrischer Verbraucher als auch eine Vielzahl solcher Verbraucher, insbesondere im Bordnetz eines Fahrzeugs, welches einen elektrischen Antrieb umfassen kann aber nicht muss, verstanden werden.

Neben diesem Komponenten 2, 3, 4 umfasst das Brennstoffzellensystem 1 ausserdem eine Schalteinrichtung 5 mit zwei Schaltern 5a, 5b, durch welche die Brennstoffzelle 2 und die Energiespeichereinrichtung 3 unabhängig voneinander periodisch mit dem wenigstens einen elektrischen Verbraucher 4 verbunden und getrennt werden können. Die Schalter 5a, 5b können dabei in Prinzip beliebig ausgebildet sein, wobei sich eine Ausbildung als elektronische Schalter 5a, 5b, z.B. auf der Basis von MOSFET's, aufgrund der leichten und schnellen Ansteuerbarkeit besonders anbietet.

Die Ansteuerung der beiden Schalter 5a, 5b verfolgt dabei immer das Ziel, Verlustleistungen bei idealer Versorgung des Verbrauchers 4 zu minimieren und damit letztendlich den Wirkungsgrad des Systems zu steigern. Folgenden Verfahrensvarianten sind dazu besonders einzeln oder in beliebigen Kombinationen voneinander gut geeignet.

So kann beispielsweise, wenn mehr Leistung von der Brennstoffzelle 2 erzeugt wird als der Verbraucher 4 benötigt, die Energiespeichereinrichtung 3 über den Schalter 5b hinzugeschaltet werden, um die Überschussleistung zu speichern. Der Schalter 5b kann dabei im Pulsbetrieb geschaltet werden. Überschüssige Leistung geht damit nicht mehr verloren, sondern kann in dem Brennstoffzellensystem 1 zu einem späteren Zeitpunkt, wenn Sie benötigt wird, nutzbringend eingesetzt werden.

Grundsätzlich kann beim Laden der Energiespeichereinrichtung 3, insbesondere wenn diese als Batterie, z.B. auf Basis von Blei, Lithium, Nickel-Metall-Hydrid oder dergleichen, aufgebaut ist, diese gepulst zu den anderen Komponenten geschaltet werden, wobei die Dauer jedes Leistungspulses kürzer ist, als die Dauer der Entladung einer der Energiespeichereinrichtung 3 eigenen inneren Kapazität.

Dabei, oder auch bei der Verwendung einer Parallelschaltung der Batterie und eines Ladungsspeichers, z.B. eines Dünnschichtkondensators (sogenannter Supercap), als Energiespeichereinrichtung 3, kann durch das gepulste Laden durch periodisches Schließen und Öffnen des Schalters 5b die Verlustleistung in der Batterie bzw. an deren Innenwiderstand minimiert werden. Durch die Speicherung hoher Leistungsspitzen in der Kapazität (der Batterie und/oder des externen Ladungsspeichers) werden diese "langsam" und bei niedrigeren Strömen in die Batterie eingespeichert. Die unvermeidlichen Verluste an deren Innenwiderstand fallen, aufgrund der "geglätteten" Stromspitzen.

Aus vergleichbarem Grund wird die Energiespeichereinrichtung 3 zumindest immer dann von den anderen Komponenten 2, 4 getrennt, wenn sich beim Hinzuschalten der Brennstoffzelle 2 Spannungsspitzen ergeben, und frühestens nach Abklingen dieser Spannungsspitzen wieder mit den anderen Komponenten verbunden.

Falls als die Energiespeichereinrichtung 3 eine Batterie genutzt wird, oder die Energiespeichereinrichtung 3 zumindest eine solche Batterie als eines ihrer Teile aufweist, kann die Energiespeichereinrichtung 3 oberhalb und unterhalb vorgegebenen Schwellenspannungen durch den Schalter 5b von den restlichen Komponenten 2, 3 getrennt werden.

Durch diese Vorgehensweise wird zwar keine Minimierung von Verlusten erzielt, sie dient aber letztendlich trotzdem der Steigerung der Performance des Brennstoffzellensystems 1. Die Schwellenspannungen können nämlich in Abhängigkeit der Batterieeigenschaften so gewählt werden, dass sowohl ein Überladen, als auch eine Tiefentladung vermieden werden kann. Dies dient vor allem zum Steigerung der Lebensdauer der meist teuren und je nach Bautyp entsprechend empfindlichen Batterien, z.B. Bleiakkumulatoren. Damit kann auf die Problematik der Überladung sehr leicht reagiert werden. Diese Problematik tritt in ersten Linie dann auf, wenn die Batterie aufgrund von Platz- und Kostentgründen in Verhältnis zur Brennstoffzelle 2 klein bis sehr klein gewählt wurde, wie dies bei mobilen Anwendung häufig der Fall ist.

Unabhängig von der Art der eingesetzten Energiespeichereinrichtung 3 ist es für die optimale Versorgung des Verbrauchers 4 günstig, wenn diese lückenlos gewährleistet werden kann. Dazu wird die Energiespeichereinrichtung 3 zumindest immer dann mit dem Verbraucher 4 verbunden, wenn dieser elektrische Leistung benötigt, und wenn die Brennstoffzelle 2 nicht mit dem Verbraucher 4 verbunden ist.

Neben der lückenlosen Versorgung des Verbrauchers mit Leistung ist so außerdem eine gute Ausnutzung der beim vorliegen von Überschussleistung oder dergleichen in die Energiespeichereinrichtung 3 gespeicherten Energie gegeben.

Gemäß einer sehr günstigen Weiterbildung können die Schalter 5a, 5b so geschaltet werden, dass das System zwischen verschiedenen Betriebszuständen hin und her geschaltet wird, und zwar in der Art, dass sich im zeitlichen Mittel ein hinsichtlich Leistung und Wirkungsgrad optimierter Betriebbereich des Brennstoffzellensystems 1 einstellt. Diese Vorgehensweise soll an einem Beispiel nachfolgend anhand der in Fig. 2 dargestellten Kennlinien verdeutlichet werden.

Das Strom(I)-Sparinungs(U)-Diagramm zeigt eine Kennlinie 6 der Brennstoffzelle 2 zusammen mit einer Kennlinie 7 des elektrischen Verbrauchers 4. Die Kennlinie 6 der Brennstoffzelle 2 unterteilt sich in zwei verschiedene Bereiche 6a, 6b, wobei in dem ersten Bereich 6a die Kennlinie 6 der Brennstoffzelle 2 bei stationär begrenzter Versorgung mit Brennstoff dargestellt ist. Der gestrichelte Bereich 6b der Kennlinie 6 würde die prinzipiell auftretende Kennlinie 6 bei höherer Versorgung mit Brennstoff darstellen. Eine weitere Kennlinie 8 spiegelt den Verbraucher in Kombination mit der Energiespeichereinrichtung 3 wieder. Berücksichtigt man ausserdem noch die Kapazität, welche z.B. einer Batterie als Energiespeichereinrichtung 3 inhärent ist, so erhält man die Kennlinie 8'.

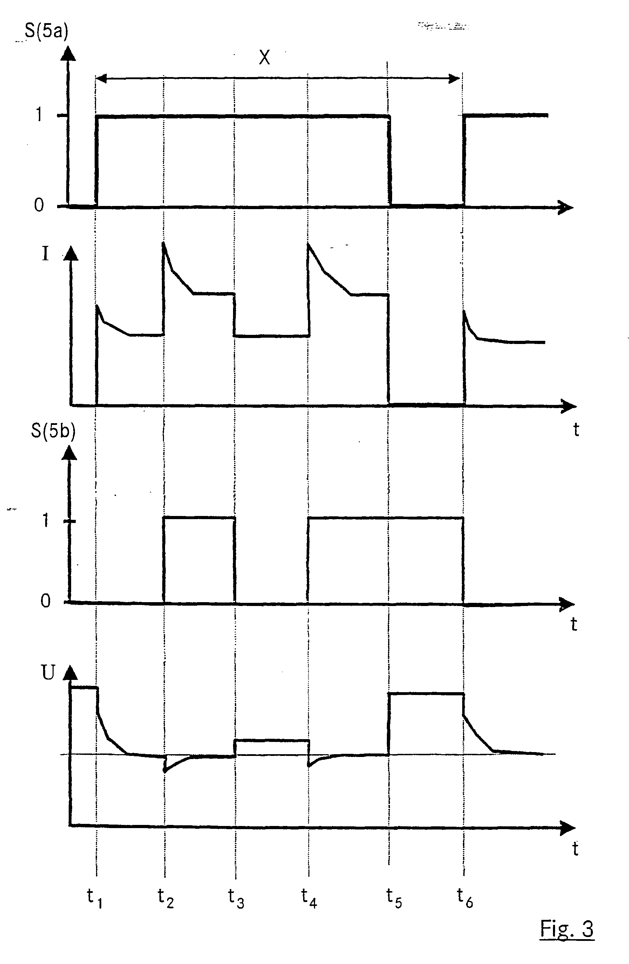

Neben der oben bereits angesprochenen statischen Kennlinie 6 der Brennstoffzelle 2 in dem Strom-Spannungs-Diagramm der Fig. 2 ist auch eine Kennlinie 9 der Brennstoffzelle 2 berücksichtigt, welche sich unmittelbar nach dem Einschalten derselben, unter Berücksichtigung der der Brennstoffzelle 2 inhärenten Kapazität, ergibt. Neben den Kennlinien 6,7,8,9 sind außerdem die sich in ihren Schnittpunkten und den Schnittpunkten mit den Achsen ergebenden Betriebspunkte in dem Strom-Spannungs-Diagramm der Fig. 2 zu erkennen. So liefert beispielsweise der Schnittpunkt der Kennlinie 6 bzw. 9 mit der Spannungsachse U den Punkt 10, welcher den ausgeschalteten Zustand der Brennstoffzelle 2 symbolisiert. Diese Betriebspunkte werden nachfolgend unter Bezugnahme auf Fig. 2 und Fig. 3 eingehend erläutert, wobei jedoch zuerst die Inhalte der Fig. 3 kurz erläutert werden sollen.

In Fig. 3 sind in vier einzelnen Diagrammen die für das nachfolgend beschriebene Verfahren charakteristischen Größen jeweils in einem zeitlichen Verlauf dargestellt. In dem ersten der Diagramme ist dazu die Schalterstellung S des Schalters 5a über der Zeit t dargestellt. Da der Schalter 5a ebenso wie der Schalter 5b aus Sicherheitserwägungen heraus in idealer Weise so gestaltet ist, dass er bei Bestromung schließt, symbolisiert hier der Zustand 1 den geschlossen Schalter 5a, der Zustand 0 den geöffneten. Der Schalter 5a ist damit also vom Zeitpunkt t₁ bis zum Zeitpunkt t₅ geschlossen, die Brennstoffzelle 2 ist mit dem Verbraucher 4 verbunden. Zwischen den Zeitpunkten t₅ und t₆ ist der Schalter 5a dagegen offen.

Das zweite Diagramm zeigt den Strom I aus der Brennstoffzelle 2 über der Zeit t, während das dritte Diagramm wieder einen Schalterzustand S, in diesen Falle den des Schalters 5b analog zu dem oberen Diagramm zeigt. Im untersten Diagramm ist schließlich noch die Spannung U aus der Brennstoffzelle 2 über der Zeit t aufgetragen.

Ohne explizit auf die Diagramme der Fig.3 einzugehen, wird das oben angesprochenen Verfahren nun unter impliziter Bezugnahme auf Fig. 3 anhand der in Fig. 2 dargestellten Kennlinien 6, 7, 8, 9 beschrieben.

Schaltet man die Brennstoffzelle 2 bei zugeschaltetem Verbraucher 4 und abgeschalteter Energiespeichereinrichtung 3 (Schalter 5a geschlossen = Zustand 1 und Schalter 5b offen = Zustand 0) ausgehend von dem oben erläuterten Punkt 10 ein, so wird sich zuerst ein Betriebspunkt 11 als Schnittpunkt der Kennlinien 7 und 9 einstellen. Diese wird dann auf den Schnittpunkt 12 mit der statischen Kennlinie 6 der Brennstoffzelle 2 wandern. Wird nun die Energiespeichereinrichtung 3 durch Schließen des Schalters 5b hinzugeschaltet, so stellte sich zuerst der Punkt 13, dann der stationäre Betriebspunkt 14 ein. Durch Abschalten der Energiespeichereinrichtung 3 (Schalter 5b = Zustand 0) kann dann die "Schleife" 12, 13, 14 erneut durchlaufen werden. Um die Verluste am Innenwiderstand der Batterie zu verringern, kann analog zu oben bereits Ausgeführten die Einschaltdauer der Energiespeichereinrichtung 3 so kurz gewählt werde, das der Punkt 14 real nie erreicht wird, sondern bereits kurz davor, also kurz bevor sich die inhärente Kapazität der Energiespeichereinrichtung 3 voll geladen hat, wieder zu dem Punkt 12 geschaltet wird.

Wird die Brennstoffzelle 2 abgeschaltet, wie es beispielsweise aus Regelungsgründen, wie sie in der oben genannten DE 100 54 429 A1 beschreiben sind, notwendig werden kann, so kann die Versorgung des Verbrauchers 4 durch die Energiespeichereinrichtung 3 aufrecht erhalten werden. Zum Zeitpunkt t₆, dem Zeitpunkt des erneuten Hinzuschaltens der Brennstoffzelle 2 über ein Schließen des Schalters 5a beginnt in dem hier beschriebenen Fall ein Wiederholungszyklus X von neuem. Durch das regelmäßige Ausschalten der Brennstoffzelle 2 lassen sich außerdem die beim Wiedereinschalten entstehenden hohen Spannungen zur Spannungsanhebung aufgrund der inhärenten Kapazität der Brennstoffzelle 2 ideal nutzen.

Im zeitlichen Mittel betrachtet stellt sich bei einem derartigen Vorgehen ein Systemwirkungsgrad ein, welche über dem Wirkungsgrad eines stationären Betriebs liegt. Da außerdem auf DC/DC-Wandler oder dergleichen verzichtet werden kann, können parasitäre Verluste ebenso gesenkt werden wie benötigter Bauraum und Kosten. Im zeitlichen Mittel wird das so betriebene Brennstoffzellensystem 1 dabei so viel an Wasserstoff verbrauchen, wie es dem mit 15 bezeichneten Stromäquivalent entspricht.

Unabhängig davon, wie die Schalter 5a, 5b letztendlich geschaltet werden, ist es immer sinnvoll die Schaltfrequenz, mit welcher die Schalter 5a, 5b betätigt werden bzw. die einzelnen Schaltperioden ablaufen in Abhängigkeit der von dem Verbraucher 4 benötigten Leistung zu verändern. Prinzipiell ist die Schaltfrequenz dabei möglichst hoch zu wählen, um die Spannungsanhebung aufgrund der inhärenten Kapazität der Brennstoffzelle 2 möglichst ideal nutzen zu können. Da bei zunehmender Last jedoch die Verluste an den Schaltern 5a, 5b steigen, wird die Schaltfrequenz mit zunehmender Last bzw. Leistungsanforderung durch den Verbraucher 4 gesenkt, um diese Verluste zu verringern.

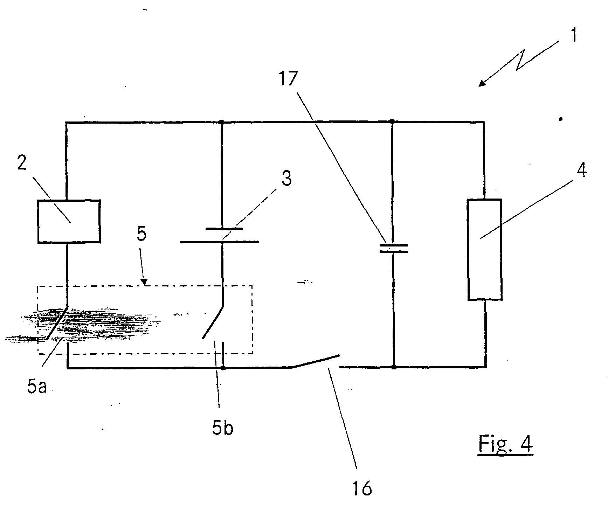

Eine weitere Variante des Brennstoffzellensystems 1 ist durch Fig. 4 beschrieben. Die wesentlichen Unterschiede zu der Ausführung gemäß Fig. 1 liegen in einem weiteren Schalter 16 sowie einem optionalen Ladungsspeicher 17, welcher beispielsweise als Supercap ausgeführt werden kann, parallel zu dem Verbraucher 4.

Der weitere Schalter 16 erlaubt es, das Brennstoffzellensystem 1 noch flexibler zu betreiben. So kann z.B. der Verbraucher 4 komplett von den restlichen Komponenten 2, 3 getrennt werden, so dass beispielsweise ein Laden der Energiespeichereinrichtung 3 über die Brennstoffzelle 2, vollkommen unabhängig vom Verbraucher 4, möglich wird.

Der optionale Ladungsspeicher 17, welcher im Falle der Ausführungen gemäß Fig. 4 zusammen mit dem Verbraucher 4 geschaltet werden kann, könnte auch im Falle einer Ausführung ohne den weiteren Schalter 16 genutzt werden. Durch diesen optionalen Ladungsspeicher 17 werden Spannungsspitzen geglättet. Außerdem sorgt der Ladungsspeicher 17 dafür, dass die gepulste Leistung deutlich geglättet beim Verbraucher 4 ankommt. Durch Strom- bzw. Spannungsspitzen, welche sich z.B. beim Zuschalten der Brennstoffzelle 2 ergeben können, verursachte Verluste z.B. in Widerständen, lassen sich so immer auf den Mittelwert des Stromes reduzieren. Die Belastung des Verbrauchers durch die Stromspitzen wird verringert, die Störungsanfälligkeit sinkt.

Ansonsten lässt-sich die Ausführung des Brennstoffzellensystems 1 gemäß der Darstellung in Fig. 4 analog zu dem oben beschriebenen Brennstoffzellensystem 1 der Fig. 1 betreiben.

Zusammenfassend kann die Erfindung also ein Brennstoffzellensystem 1 zur Versorgung wenigstens eines elektrischen Verbrauchers mit elektrischer Leistung, umfassend zumindest eine Brennstoffzelle und eine Energiespeichereinrichtung, sowie eine Schalteinrichtung zum Trennen und Verbinden des Brennstoffzellensystems mit/von dem wenigstens einen Verbraucher, betreffen. Die Schalteinrichtung kann wenigstens zwei Schalter aufweisen, so dass die Brennstoffzelle und die Energiespeichereinrichtung unabhängig voneinander mit dem wenigstens einen elektrischen Verbraucher trennbar und verbindbar sind. Außerdem kann die Erfindung ein Verfahren zum Betreiben eines solchen Brennstoffzellensystems betreffen, bei welchem die Schalter periodisch betätigt werden.

Die Erfindung kann, muss jedoch nicht zwingend, in mobilen Brennstoffzellensystemen, z.B. als Antrieb oder als APU für ein Fahrzeug, eingesetzt werden.

## Patentansprüche

1. Verfahren zum Betreiben eines Brennstoffzellensystem zur Versorgung wenigstens eines elektrischen Verbrauchers mit elektrischer Leistung, umfassend zumindest eine Brennstoffzelle und eine Energiespeichereinrichtung, sowie eine Schalteinrichtung zum Trennen und Verbinden des Brennstoffzellensystems mit dem wenigstens einen Verbraucher, wobei die Brennstoffzelle (2) und die Energiespeichereinrichtung (3), über wenigstens zwei Schalter (5a,5b) der Schalteinrichtung (5), unabhängig voneinander periodisch mit dem wenigstens einen elektrischen Verbraucher (4) verbunden und getrennt werden,
**dadurch gekennzeichnet ,**
**dass**, wenn mehr Leistung von der Brennstoffzelle (2) erzeugt wird als der wenigstens eine Verbraucher benötigt, die Energiespeichereinrichtung (3) gepulst hinzugeschaltet wird, um die Überschussleistung zu speichern.

2. Verfahren nach Anspruch 1,
**dadurch gekennzeichnet ,**
**dass** beim Laden der Energiespeichereinrichtung (3), insbesondere bei hohen Ladeleistungen, diese gepulst zu den anderen Komponenten (2,4) geschaltet wird, wobei die Dauer jedes Leistungspulses kürzer ist, als die Dauer der Entladung einer der Energiespeichereinrichtung (3) eigenen inneren Kapazität.

3. Verfahren nach Anspruch 1 oder 2,
**dadurch gekennzeichnet ,**
**dass** die Energiespeichereinrichtung (3) oberhalb und unterhalb vorgegebenen Schwellenspannungen durch den Schalter (5b) von den restlichen Komponenten getrennt wird.

4. Verfahren nach Anspruch 1, 2 oder 3,
**dadurch gekennzeichnet ,**
**dass** die Energiespeichereinrichtung (3) zumindest immer dann mit dem wenigsten einen Verbraucher (4) verbunden wird, wenn dieser elektrische Leistung benötigt, und wenn die Brennstoffzelle (2) nicht mit dem wenigstens einen elektrischen Verbraucher verbunden ist.

5. Verfahren nach einem der Ansprüche 1 bis 4,
**dadurch gekennzeichnet ,**
**dass** die Energiespeichereinrichtung (3) zumindest immer dann von den anderen Komponenten (2,4) getrennt wird, wenn sich beim Hinzuschalten der Brennstoffzelle (2) Spannungsspitzen ergeben, und frühestens nach Abklingen dieser Spannungsspitzen wieder mit den anderen Komponenten (2,4) verbunden wird.

6. Verfahren nach einem der Ansprüche 1 bis 5,
**dadurch gekennzeichnet ,**
**dass** die Schalter (5a,5b) so geschaltet werden, dass das Brennstoffzellensystem (1) zwischen verschiedenen Betriebszuständen hin und hergeschaltet wird, und zwar in der Art, dass sich im zeitlichen Mittel eine hinsichtlich Leistung und Wirkungsgrad optimierte Betriebsweise des Brennstoffzellensystems (1) einstellt.

7. Verfahren nach einem der Ansprüche 1 bis 6,
**dadurch gekennzeichnet ,**
**dass** die Schaltfrequenz, mit welcher die Schalter (5a,5b) betätigt werden in Abhängigkeit der von dem Verbraucher (4) benötigten Leistung verändert wird.

## Claims

1. Method for operating a fuel cell system for supplying at least one electric consumer with electric power, comprising at least one fuel cell and an energy storage device, and also a switching device for separating and connecting the fuel cell system from/to the at least one consumer, the fuel cell (2) and the energy storage device (3) being periodically connected and separated to and from the at least one electric consumer (4) independently of one another by means of at least two switches (5a, 5b) of the switching device (5),
**characterized in that**, if more power than the at least one consumer requires is generated by the fuel cell (2), the energy storage device (3) is additionally connected in a pulsed manner in order to store the excess power.

2. Method according to Claim 1, **characterized in that**, when charging the energy storage device (3), in particular in the case of high charging power levels, it can be switched in a pulsed manner to the other components (2, 4), the duration of each power pulse being shorter than the duration of the discharge of an internal capacitance specific to the energy storage device (3).

3. Method according to Claim 1 or 2, **characterized in that** the energy storage device (3) is separated from the remaining components by the switch (5b) above and below predetermined threshold voltages.

4. Method according to Claim 1, 2 or 3, **characterized in that** the energy storage device (3) is connected to the at least one consumer (4) at least whenever the latter requires electric power, and when the fuel cell (2) is not connected to the at least one electric consumer.

5. Method according to one of Claims 1 to 4, **characterized in that** the energy storage device (3) is separated from the other components (2, 4) at least whenever voltage peaks occur when the fuel cell (2) is additionally connected, and is reconnected to the other components (2, 4) at the earliest when these voltage peaks have subsided.

6. Method according to one of Claims 1 to 5, **characterized in that** the switches (5a, 5b) are switched in such a way that the fuel cell system (1) is switched back and forth between different operating states, to be precise in such a way that an optimized operating range of the fuel cell system (1) with regard to power and efficiency is established on average over time.

7. Method according to one of Claims 1 to 6, **characterized in that** the switching frequency with which the switches (5a, 5b) are actuated is changed in dependence on the power required by the consumer (4).

## Revendications

1. Procédé pour faire fonctionner un système de pile à combustible destiné à alimenter en puissance électrique au moins un utilisateur électrique, comprenant au moins une pile à combustible et un dispositif d'accumulation d'énergie, ainsi qu'un dispositif de commutation pour relier le système de pile à combustible à l'utilisateur au moins unique et l'en séparer, sachant que la pile à combustible (2) et le dispositif (3) d'accumulation d'énergie sont, via au moins deux commutateurs (5a, 5b) du dispositif de commutation (5), périodiquement reliés à et séparés de l'utilisateur au moins unique (4) indépendamment l'un de l'autre,
**caractérisé en ce que**, si la pile à combustible (2) produit plus de puissance que l'utilisateur au moins unique en a besoin, le dispositif (3) d'accumulation d'énergie est connecté en complément de manière pulsée pour emmagasiner la puissance excédentaire.

2. Procédé selon la revendication 1, **caractérisé en ce que**, lors du chargement du dispositif (3) d'accumulation d'énergie, notamment en cas de grandes puissances de chargement, ce dispositif est connecté de manière pulsée aux autres éléments (2, 4), sachant que la durée de chaque impulsion de puissance est inférieure à la durée de déchargement d'une capacitance interne propre au dispositif (3) d'accumulation d'énergie.

3. Procédé selon la revendication 1 ou 2, **caractérisé en ce que** le dispositif (3) d'accumulation d'énergie est séparé par le commutateur (5b) des autres éléments au-dessus et en dessous de tensions de seuil prédéfinies.

4. Procédé selon la revendication 1, 2 ou 3, **caractérisé en ce que** le dispositif (3) d'accumulation d'énergie est toujours relié à l'utilisateur au moins unique (4) au moins si ce dernier a besoin de puissance électrique et si la pile à combustible (2) n'est pas relié à l'utilisateur électrique au moins unique (4).

5. Procédé selon l'une quelconque des revendications 1 à 4, **caractérisé en ce que** le dispositif (3) d'accumulation d'énergie est toujours séparé des autres éléments (2, 4) au moins lorsque des pointes de tension apparaissent lors de la connexion de la pile à combustible (2) en complément, et il est à nouveau relié aux autres éléments (2, 4) au plus tôt à la suite de la décroissance de ces pointes de tension.

6. Procédé selon l'une quelconque des revendications 1 à 5, **caractérisé en ce que** les commutateurs (5a, 5b) sont commutés de telle sorte que le système (1) de pile à combustible est commuté en va-et-vient entre différents états de fonctionnement, et ce de telle sorte qu'on obtient en moyenne dans le temps un mode de fonctionnement du système (1) de pile à combustible qui est optimisé en termes de puissance et de rendement.

7. Procédé selon l'une quelconque des revendications 1 à 6, **caractérisé en ce que** la fréquence de commutation avec laquelle les commutateurs (5a, 5b) sont actionnés est modifiée en fonction de la puissance dont l'utilisateur (4) a besoin.
